# EUROPEAN PATENT SPECIFICATION

(11) **EP 3 665 446 B1**
(45) Date of publication and mention of the grant of the patent: **28.09.2022**
(21) Application number: 17754933.4
(22) Date of filing: 08.08.2017
(51) Int. Cl.: G01F 15/075, G01F 1/84

(54) **FLOWMETER FALSE TOTALIZING ELIMINATION DEVICE AND METHOD**
VORRICHTUNG UND VERFAHREN ZUR BESEITIGUNG VON FALSCHER SUMMIERUNG BEI EINEM DURCHFLUSSMESSER
DISPOSITIF ET PROCÉDÉ D'ÉLIMINATION DE TOTALISATIONS FAUSSES D'UN DÉBITMÈTRE

(43) Date of publication of application: 17.06.2020
(73) Proprietor: Micro Motion, Inc., Boulder, CO 80301 (US)
(72) Inventor: WEINSTEIN, Joel, Boulder, Colorado 80301 (US); SCHOLLENBERGER, Frederick Scott, Boulder, Colorado 80305 (US)
(74) Representative: Ellis, Christopher Paul
(86) International application number: PCT/US2017/045943
(87) International publication number: WO 2019/032098

(56) References cited:
- US-A- 4 996 871
- US-A- 4 996 871
- US-A1- 2006 195 282
- US-A1- 2006 195 282
- US-A1- 2011 178 738
- US-A1- 2011 178 738
- US-A1- 2012 109 543
- US-A1- 2012 109 543
- US-B2- 7 966 894

## Description

### FIELD OF THE INVENTION

The present invention relates to flowmeter devices and methods, and more particularly, to flowmeter devices and methods for reducing and/or eliminating false totalizing.

### BACKGROUND

Vibrating conduit sensors, such as Coriolis mass flowmeters and vibrating densitometers, typically operate by detecting motion of a vibrating conduit that contains a flowing material. Properties associated with the material in the conduit, such as mass flow, density, and the like, can be determined by processing measurement signals received from motion transducers associated with the conduit. The vibration modes of the vibrating material-filled system generally are affected by the combined mass, stiffness, and damping characteristics of the containing conduit and the material contained therein.

A typical Coriolis mass flowmeter includes one or more conduits (also called flow tubes) that are connected inline in a pipeline or other transport system and convey material, e.g., fluids, slurries, emulsions, and the like, in the system. Each conduit may be viewed as having a set of natural vibration modes, including for example, simple bending, torsional, radial, and coupled modes. In a typical Coriolis mass flow measurement application, a conduit is excited in one or more vibration modes as a material flows through the conduit, and motion of the conduit is measured at points spaced along the conduit. Excitation is typically provided by a driver, e.g., an electromechanical device, such as a voice coil-type actuator, that perturbs the conduit in a periodic fashion. Mass flow rate may be determined by measuring time delay or phase differences between motions at the transducer locations. Two or more such transducers (or pickoff sensors) are typically employed in order to measure a vibrational response of the flow conduits, and are typically located at positions upstream and downstream of the driver. Instrumentation receives signals from the pickoff sensors and processes the signals in order to derive a mass flow rate measurement.

Flowmeters may be used to perform mass flow rate measurements for a wide variety of fluid flows. One area in which Coriolis flowmeters can potentially be used is with processes that comprise multiphase flow, including oil and/or gas, but also including other components, including water and air, for example, and/or solids. It is, of course, highly desirable that the resulting metering be as accurate as possible, even for such multiphase flows. Coriolis meters offer high accuracy for single phase flows. However, when a Coriolis flowmeter is used to measure aerated fluids or fluids including entrained gas, the accuracy of the meter can be significantly degraded. This is similarly true for flows having entrained solids and for mixed-phase fluid flows, such as when hydrocarbon fluids contain water.

False totalizing at zero flow is another issue known to affect Coriolis meters. This may occur when fluid flow is stopped through the meter, but bubbles or solid particles still remain in the flow tubes, or when the flow tubes are partially full (typically at the beginning or end of a batch). When in this state, the meter may continue to register flow, even though fluid flow is actually stopped. This particularly occurs if the distribution of bubbles or particles happens to produce enough asymmetric mass or damping of the sensor assembly to cause the delta-t to rise above a predetermined low-flow threshold value such that flow totalization occurs when in reality there is none. This false flow will continue and totalizing will occur until flow begins again. Thus, even if the false flow value is small, if the time between batches is long, large totalization will occur.

As noted, false flow occurs when asymmetric mass or damping causes a delta-t that goes above a predetermined low-flow threshold. Several methods already exist to stop totalizing in these cases. For example, raising the low-flow threshold, as is disclosed in U.S. Patent No. 4,996,871, can help, though the false flow often gets too large for this to be effective. Furthermore, a higher low-flow threshold can prevent real flow from totalizing. Another solution is to implement a density cutoff that stops totalizing if density goes outside a certain range. However, density does not always act as expected with entrained gas present. Drive gain may also be used to detect entrained gas, however drive gain may only increase a small amount even when false totalizing is occurring at a harmful level. This is because it only takes a small amount of asymmetric damping to cause a large false flow, yet it takes greater levels of overall damping to cause high drive gain. U.S. Patent No. 7,966,894 discloses a flowmeter in which a damping value, based on both sensor signals, is related to inhomogeneities within the measuring tube.

It has been proposed to pair additional devices with a Coriolis meter that are capable of detecting false flow. Those devices, such as liquid detector switches, provide input to the Coriolis meter to override and control the totalizer. When the liquid detector detects an empty condition, the device sends a zero signal to the Coriolis meter and the flow totalizing is stopped. This solution, however, requires a complex system and additional devices, which is not desired in most applications.

There thus remains a need in the art for a vibratory flowmeter that detects and prevents false totalizing without the use of external devices. Embodiments herein provide methods and devices used to detect and prevent false totalizing, and an advance in the art is achieved. Some embodiments compare left and right pickoff voltages and/or left and right meter verification results.

### SUMMARY OF THE INVENTION

A method for operating a flowmeter is provided according to an embodiment. The method comprises flowing a process fluid through the flowmeter and measuring a mass flow rate of the process fluid. The process fluid flowing through the flowmeter is totalized. A first flowmeter parameter is measured, wherein measuring a first flowmeter parameter comprises measuring a magnitude of asymmetry between a magnitude of a first pick-off sensor measurement and a magnitude of a second pick-off sensor measurement, and the measured mass flow rate is set to zero if the first flowmeter parameter differs from a predetermined threshold by a predetermined amount. Totalizing is halted if the first flowmeter parameter differs from a predetermined threshold by a predetermined amount.

Meter electronics for a flowmeter configured to receive a process fluid is provided according to an embodiment. The meter electronics comprises an interface configured to communicate with a flowmeter assembly of the flowmeter, and receive a vibrational response, and a processing system coupled to the interface. The meter electronics comprises a false totalizing routine configured to determine a measured mass flow rate of the process fluid in the flowmeter, totalize the process fluid, measure a first flowmeter parameter, wherein measuring a first flowmeter parameter comprises measuring a magnitude of asymmetry between a magnitude of a first pick-off sensor measurement and a magnitude of a second pick-off sensor measurement, set the measured mass flow rate to zero if the first flowmeter parameter differs from a predetermined threshold by a predetermined amount, and halt totalizing if the first flowmeter parameter differs from a predetermined threshold by a predetermined amount.

### ASPECTS OF THE INVENTION

According to an aspect, a method for operating a flowmeter comprises: flowing a process fluid through the flowmeter, measuring a mass flow rate of the process fluid, totalizing the process fluid flowing through the flowmeter, measuring a first flowmeter parameter, wherein measuring a first flowmeter parameter comprises measuring a magnitude of asymmetry between a magnitude of a first pick-off sensor measurement and a magnitude of a second pick-off sensor measurement, setting the measured mass flow rate to zero if the first flowmeter parameter differs from a predetermined threshold by a predetermined amount, and halting totalizing if the first flowmeter parameter differs from a predetermined threshold by a predetermined amount.

Preferably, the method comprises the steps of: measuring a second flowmeter parameter, wherein the step of setting the measured mass flow rate to zero if the first flowmeter parameter differs from a predetermined threshold by a predetermined amount comprises setting the measured mass flow rate to zero if the first flowmeter parameter and the second flowmeter parameter each differ from respective predetermined thresholds by respective predetermined amounts. The step of halting totalizing if the first flowmeter parameter differs from a predetermined threshold by a predetermined amount comprises setting the measured mass flow rate to zero if the first flowmeter parameter and the second flowmeter parameter each differ from respective predetermined thresholds by respective predetermined amounts.

Preferably, the first or second flowmeter parameters comprise a drive current.

Preferably, the first or second flowmeter parameters comprise a delta t.

Preferably, the first or second flowmeter parameters comprise a voltage difference between a first pick-off sensor and a second pick-off sensor.

Preferably, the first or second flowmeter parameters comprise a calculated flow tube mass difference measured between a first pick-off sensor and a second pick-off sensor.

Preferably, the first or second flowmeter parameters comprise a calculated tube stiffness difference measured between a first pick-off sensor and a second pick-off sensor.

Preferably, the first or second flowmeter parameters comprise a density.

Preferably, the first or second flowmeter parameters comprise a drive gain.

According to an aspect, meter electronics for a flowmeter are configured to receive a process fluid, the meter electronics comprising an interface configured to communicate with a flowmeter assembly of the flowmeter, and receive a vibrational response, and a processing system coupled to the interface comprising a false totalizing routine configured to: determine a measured mass flow rate of the process fluid in the flowmeter, totalize the process fluid, measure a first flowmeter parameter, wherein measuring a first flowmeter parameter comprises measuring a magnitude of asymmetry between a magnitude of a first pick-off sensor measurement and a magnitude of a second pick-off sensor measurement, J Z set the measured mass flow rate to zero if the first flowmeter parameter differs from a predetermined threshold by a predetermined amount, and halt totalizing if the first flowmeter parameter differs from a predetermined threshold by a predetermined amount.

Preferably, the false totalizing routine is further configured to measure a second flowmeter parameter. Setting the measured mass flow rate to zero if the first flowmeter parameter differs from a predetermined threshold by a predetermined amount comprises setting the measured mass flow rate to zero if the first flowmeter parameter and the second flowmeter parameter each differ from respective predetermined thresholds by respective predetermined amounts. Halting totalizing if the first flowmeter parameter differs from a predetermined threshold by a predetermined amount comprises setting the measured mass flow rate to zero if the first flowmeter parameter and the second flowmeter parameter each differ from respective predetermined thresholds by respective predetermined amounts.

Preferably, the first or second flowmeter parameters comprise a drive current.

Preferably, the first or second flowmeter parameters comprise a delta t.

Preferably, the first or second flowmeter parameters comprise a voltage difference between a first pick-off sensor and a second pick-off sensor.

Preferably, the first or second flowmeter parameters comprise a calculated flow tube mass difference measured between a first pick-off sensor and a second pick-off sensor.

Preferably, the first or second flowmeter parameters comprise a calculated tube stiffness difference measured between a first pick-off sensor and a second pick-off sensor.

Preferably, the first or second flowmeter parameters comprise a density.

Preferably, the first or second flowmeter parameters comprise a drive gain.

### BRIEF DESCRIPTION OF THE DRAWINGS

FIG. 1 shows a flowmeter comprising a sensor assembly and meter electronics;
FIG. 2 shows a block diagram of the meter electronics according to an embodiment;
FIG. 3 is a graph illustrating flowmeter drive current as a function of injected air;
FIG. 4 is a graph illustrating flowmeter delta t as a function of injected air;
FIG. 5 is a graph illustrating flowmeter pick-off voltages as a function of injected air;
FIG. 6 is a graph illustrating flowmeter measured flow tube mass as a function of injected air;
FIG. 7 is a graph illustrating flowmeter measured flow tube stiffness as a function of injected air;
FIG. 8 is a flow chart illustrating a method of false totalizing mitigation according to an embodiment; and
FIG. 9 is a flow chart illustrating a method of false totalizing mitigation according to an alternate embodiment.

### DETAILED DESCRIPTION

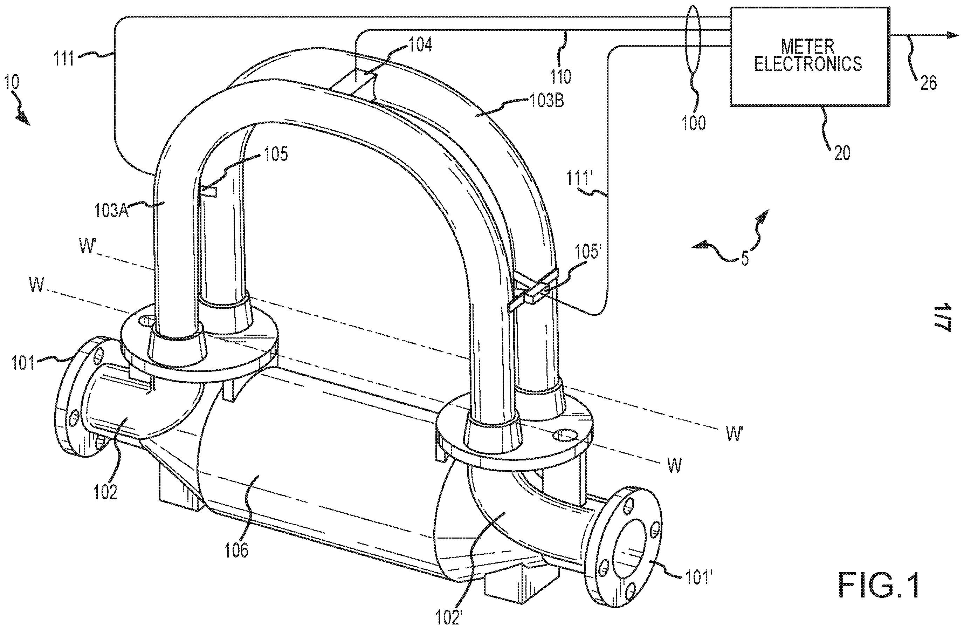

**FIGS. 1-9** and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. As a result, the invention is not limited to the specific examples described below, but only by the appended claims.

**FIG. 1** shows a flowmeter 5 according to an embodiment. The flowmeter 5 comprises a sensor assembly 10 and meter electronics 20. The meter electronics 20 is connected to the sensor assembly 10 via leads 100 and is configured to provide measurements of one or more of a density, mass flow rate, volume flow rate, totalized mass flow, temperature, or other measurements or information over a communication path 26. The flowmeter 5 can comprise a Coriolis mass flowmeter or other vibratory flowmeter. It should be apparent to those skilled in the art that the flowmeter 5 can comprise any manner of flowmeter 5, regardless of the number of drivers, pick-off sensors, flow conduits, or the operating mode of vibration.

The sensor assembly 10 includes a pair of flanges 101 and 101', manifolds 102 and 102', a driver 104, pick-off sensors 105 and 105', and flow conduits 103A and 103B. The driver 104 and the pick-off sensors 105 and 105' are connected to the flow conduits 103A and 103B.

The flanges 101 and 101' are affixed to the manifolds 102 and 102'. The manifolds 102 and 102' can be affixed to opposite ends of a spacer 106 in some embodiments. The spacer 106 maintains the spacing between the manifolds 102 and 102'. When the sensor assembly 10 is inserted into a pipeline (not shown) which carries the process fluid being measured, the process fluid enters the sensor assembly 10 through the flange 101, passes through the inlet manifold 102 where the total amount of process fluid is directed to enter the flow conduits 103A and 103B, flows through the flow conduits 103A and 103B and back into the outlet manifold 102', where it exits the sensor assembly 10 through the flange 101'.

The process fluid can comprise a liquid. The process fluid can comprise a gas. The process fluid can comprise a multi-phase fluid, such as a liquid including entrained gases and/or entrained solids, for example without limitation. The flow conduits 103A and 103B are selected and appropriately mounted to the inlet manifold 102 and to the outlet manifold 102' so as to have substantially the same mass distribution, moments of inertia, and elastic moduli about the bending axes W-W and W'-W', respectively. The flow conduits 103A and 103B extend outwardly from the manifolds 102 and 102' in an essentially parallel fashion.

The flow conduits 103A and 103B are driven by the driver 104 in opposite directions about the respective bending axes W and W' and at what is termed the first out of phase bending mode of the flowmeter 5. The driver 104 may comprise one of many well-known arrangements, such as a magnet mounted to the flow conduit 103A and an opposing coil mounted to the flow conduit 103B. An alternating current is passed through the opposing coil to cause both conduits to oscillate. A suitable drive signal is applied by the meter electronics 20 to the driver 104 via lead 110. Other driver devices are contemplated and are within the scope of the description and claims.

The meter electronics 20 receives sensor signals on leads 111 and 111', respectively. The meter electronics 20 produces a drive signal on lead 110 which causes the driver 104 to oscillate the flow conduits 103A and 103B. Other sensor devices are contemplated and are within the scope of the description and claims.

The meter electronics 20 processes the left and right velocity signals from the pick-off sensors 105 and 105' in order to compute a flow rate, among other things. The communication path 26 provides an input and an output means that allows the meter electronics 20 to interface with an operator or with other electronic systems. The description of FIG. 1 is provided merely as an example of the operation of a flowmeter and is not intended to limit the teaching of the present invention. In embodiments, single tube and multi-tube flowmeters having one or more drivers and pickoffs are contemplated.

The meter electronics 20 in one embodiment is configured to vibrate the flow conduit 103A and 103B. The vibration is performed by the driver 104. The meter electronics 20 further receives resulting vibrational signals from the pickoff sensors 105 and 105'. The vibrational signals comprise a vibrational response of the flow conduits 103A and 103B. The meter electronics 20 processes the vibrational response and determines a response frequency and/or phase difference. The meter electronics 20 processes the vibrational response and determines one or more flow measurements, including a mass flow rate and/or density of the process fluid. Other vibrational response characteristics and/or flow measurements are contemplated and are within the scope of the description and claims.

In one embodiment, the flow conduits 103A and 103B comprise substantially omega-shaped flow conduits, as shown. Alternatively, in other embodiments, the flowmeter can comprise substantially straight flow conduits, U-shaped conduits, deltashaped conduits, etc. Additional flowmeter shapes and/or configurations can be used and are within the scope of the description and claims.

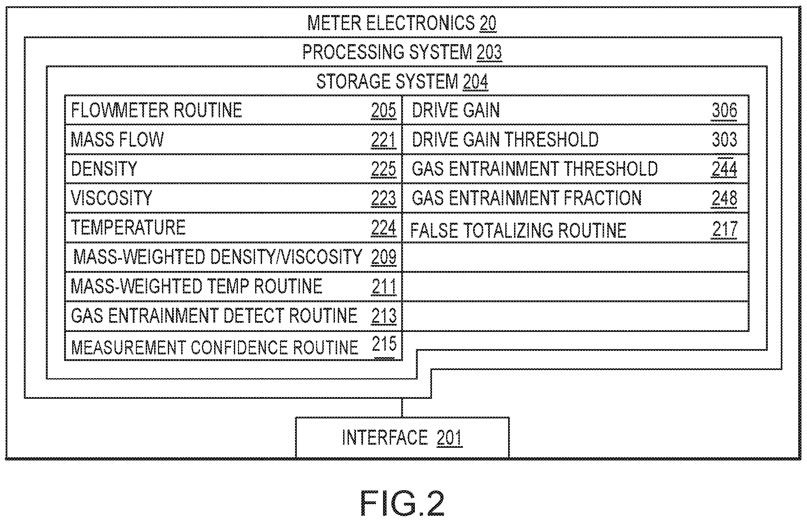

**FIG. 2** is a block diagram of the meter electronics 20 of a flowmeter 5 according to an embodiment. In operation, the flowmeter 5 provides various measurement values that may be outputted including one or more of a measured or averaged value of mass flow rate, volume flow rate, individual flow component mass and volume flow rates, and total flow rate, including, for example, both volume and mass flow.

The flowmeter 5 generates a vibrational response. The vibrational response is received and processed by the meter electronics 20 to generate one or more fluid measurement values. The values can be monitored, recorded, saved, totaled, and/or output.

The meter electronics 20 includes an interface 201, a processing system 203 in communication with the interface 201, and a storage system 204 in communication with the processing system 203. Although these components are shown as distinct blocks, it should be understood that the meter electronics 20 can be comprised of various combinations of integrated and/or discrete components.

The interface 201 is configured to communicate with the sensor assembly 10 of the flowmeter 5. The interface 201 may be configured to couple to the leads 100 (see FIG. 1) and exchange signals with the driver 104, pickoff sensors 105 and 105', and temperature sensors (not shown), for example. The interface 201 may be further configured to communicate over the communication path 26, such as to external devices.

The processing system 203 can comprise any manner of processing system. The processing system 203 is configured to retrieve and execute stored routines in order to operate the flowmeter 5. The storage system 204 can store routines including a flowmeter routine 205, a mass-weighted density/viscosity routine 209, a mass-weighted temperature routine 211, a gas entrainment detect routine 213, a measurement confidence routine 215, and a false totalizing routine 217. The measurement confidence routine 215 and/or false totalizing routine 217 may compare any signal, such as drive gain 306, vibrational frequency, vibrational amplitude, power, temperature 224, etc. between right and left pick-off sensors 105, 105'. Other measurement/processing routines are contemplated and are within the scope of the description and claims. The storage system 204 can store measurements, received values, working values, and other information. In some embodiments, the storage system stores a mass flow (*ṁ*) 221, a density (p) 225, a viscosity (µ) 223, a temperature (T) 224, a drive gain 306, a drive gain threshold 303, a gas entrainment threshold 244, a gas entrainment fraction 248, and any other variables known in the art.

The flowmeter routine 205 can produce and store fluid quantifications and flow measurements. These values can comprise substantially instantaneous measurement values or can comprise totalized or accumulated values. For example, the flowmeter routine 205 can generate mass flow measurements and store them in the mass flow 221 storage of the storage system 204, for example. The flowmeter routine 205 can generate density 225 measurements and store them in the density 225 storage, for example. The mass flow 221 and density 225 values are determined from the vibrational response, as previously discussed and as known in the art. The mass flow and other measurements can comprise a substantially instantaneous value, can comprise a sample, can comprise an averaged value over a time interval, or can comprise an accumulated value over a time interval. The time interval may be chosen to correspond to a block of time during which certain fluid conditions are detected, for example a liquid-only fluid state, or alternatively, a fluid state including liquids and entrained gas. In addition, other mass flow and related quantifications are contemplated and are within the scope of the description and claims.

As noted, drive gain may be utilized as the signal that indicates a no-flow/false totalizing condition. A drive gain threshold may be used to distinguish between periods of flow and no flow. It should be noted that, for purposes of the embodiments provided herein, that the term drive gain may, in some embodiments, refer to drive current, pickoff voltage, or any signal measured or derived that indicates the amount of power needed to drive the flow conduits 103A, 103B at a particular amplitude. In related embodiments, the term drive gain may be expanded to encompass any metric utilized to detect multi-phase flow, such as noise levels, standard deviation of signals, dampingrelated measurements, and any other means known in the art to detect a no-flow condition. Any of these metrics may be compared across the pick-off sensors 105 and 105' to detect a no-flow condition.

In general, the source of false totalizing is asymmetry, thus the embodiments provided herein utilize diagnostic approaches that report the magnitude of asymmetry to detect false flow conditions. In the claimed invention, a diagnostic relates to the difference between pick-off sensors 105 and 105' voltages, which is fundamentally a measurement of relative amplitude of vibration between the inlet and outlet of the sensor assembly 10.

Like pick-off voltage, which can be measured at inlet and outlet sides of the sensor assembly 10, meter verification provides a measurement of stiffness and/or mass at the inlet and outlet sides of the sensor assembly 10. Asymmetries such as the buildup of asymmetric flow conduit coating have been shown to be detectable with left and right meter verification measurements, and it is based upon this principle that a relative measurement of stiffness and mass may be utilized to detect false flow.

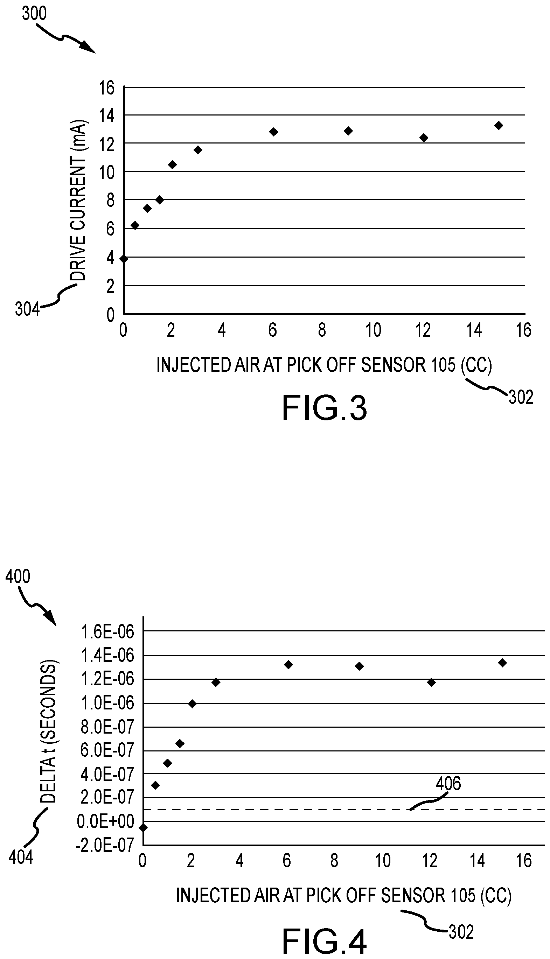

Turning to **FIGS. 3-7****,** graphs 300, 400, 500, 600, and 700 illustrate experiments conducted to characterize false flow totalization. It should be noted that the values provided are merely examples for a particular flowmeter under test, and that different flowmeters, based on size, configuration, geometry, test fluids, etc. will likely provide different values. A flowmeter 5 was mounted vertically, and was completely filled with water to ensure no air bubbles were present. A known amount of air was injected proximate one pick-off sensor 105, but not the other pick-off sensor 105'. Due to the shape of the flowmeter 5, and the mounting orientation, the injected gas resided proximate the pick-off sensor 105, thus creating a repeatable experimental setup to study a problem that is usually quite unrepeatable.

Measurements were taken at increasing amounts of gas injection 302 (x-axis) to study potential asymmetry. In **FIG. 3****,** drive current was measured 304 (y-axis) in graph 300, and delta t 404 was measured in graph 400 of **FIG. 4****.** As expected, both drive current 304 and delta t 404 increase with the increase in damping caused by the air injection. At around 6 cubic centimeters of air injected, there is no further increase in damping because the bubble void is taking up the entire flow conduit cross-section, resulting in no further decoupling. On larger meters, or in different bubble distribution scenarios, the drive current and delta t would keep increasing because the decoupling of the bubbles would keep increasing with void fraction.

Note that drive current 304 only increases slightly from 4mA to 13mA. This is a small increase, of the order which can be caused by changes in viscosity, temperature, etc. Normal detection of gas is seen with huge increases in drive current, such as up to even 75mA, for example. Even though drive current barely increases, delta t 404 increases a large amount.

A low-flow threshold 406 for the flowmeter under test, is shown on the graph of FIG. 4 in terms of delta t. This low-flow threshold 406 corresponds to 0.5 lb/min flow. As a reference, 1.6×10⁻⁶ seconds corresponds to 10 lb/min flow. It will be clear that using drive gain or current as a method to detect false totalizing is possible, but it may not be, by itself, particularly accurate, as very little asymmetric damping causes large false flow because flow is extremely sensitive to symmetry, while drive gain does not exhibit such sensitivity.

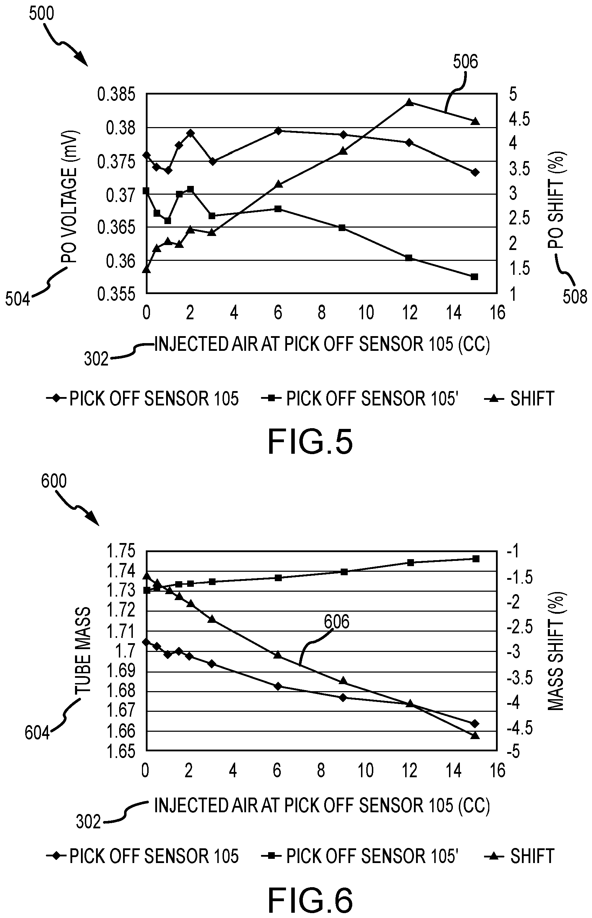

**FIG. 5** illustrates a graph 500, that compares the pick-off voltage 504 (left y-axis) between pick-off sensor 105, and pick-off sensor 105'. It will be clear that there is a voltage offset of about 0.005 mV (1.5%), even with zero injected air. This is expected, and is due to slight differences in magnet strength or the number of wire windings in the coil during manufacturing. This shift can be normalized out during calibration or once the flowmeter is installed in the field, for the purposes of detecting asymmetry and false flow. Additionally, the voltages are seen to track with each other. When one rises, the other does too. This is expected, as slight changes in the temperature or other conditions will lead to changes in frequency, magnet strength, and other parameters which will affect pick-off sensor 105 and pick-off sensor 105'equally.

As air is injected, the spread between pick-off sensor 105 and pick-off sensor 105' increases. Trace 506 represents the calculated percentage difference 508 (right y-axis) between pick-off sensor 105 and pick-off sensor 105'. A 3% shift (1.5 to 4.5%) in the pick-off voltage from pick-off sensor 105 to pick-off sensor 105' is observed. This is easily measureable through the noise, and is clearly a diagnostic that can predict asymmetry and false totalizing. In an embodiment, a ratio of mV/Hz instead of just pick-off voltage is utilized, as the sensor assembly 10 may be driven to a constant voltage/frequency, and not pick-off voltage. This mV/Hz value is found by dividing pick-off voltage by the measured drive frequency. This has the benefit of normalizing out the expected frequency variation with temperature and density over time. Because temperature and density do not change during the illustrated test, the mV/Hz results are the same as the pick-off results illustrated.

Meter Verification diagnostics (which includes flow tube mass and flow tube stiffness measurements) are also contemplated for use in the detection and prevention of false totalizing. Like pick-off voltage, meter verification diagnostics have the benefit of offering independent measurements between pick-off sensor 105 and pick-off sensor 105', thus asymmetry detection is possible.

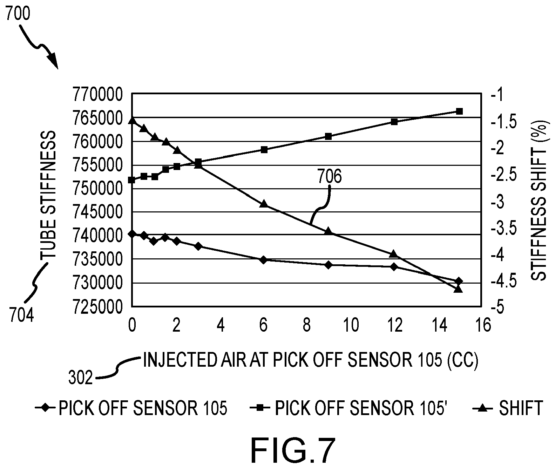

As indicated by **FIG. 6****,** a graph 600 illustrating flow tube 105, 105' mass measurements 604 (left y-axis) provides a clear indication of the asymmetry in the flowmeter 5. Trace 606 indicates the percent of mass shift (right y-axis). The stiffness measurement 704 (y-axis) behaves similarly, as illustrated by graph 700 of **FIG. 7****.** Trace 706 indicates the percent of stiffness shift (right y-axis). A marked shift is evident for both tube mass and stiffness between pick-off sensor 105 and pick-off sensor 105', and thus is yet another appropriate means for detecting false totalizing.

The detectability of false totalizing is therefore implemented using either pickoff voltage differences between the inlet pickoff 105 and the outlet pickoff 105' or via calculated mass and/or stiffness difference from inlet pickoff 105 to outlet pickoff 105'. These diagnostics are easily measured and are more sensitive to asymmetry than drive gain, which is the typical prior art approach for entrained gas detection.

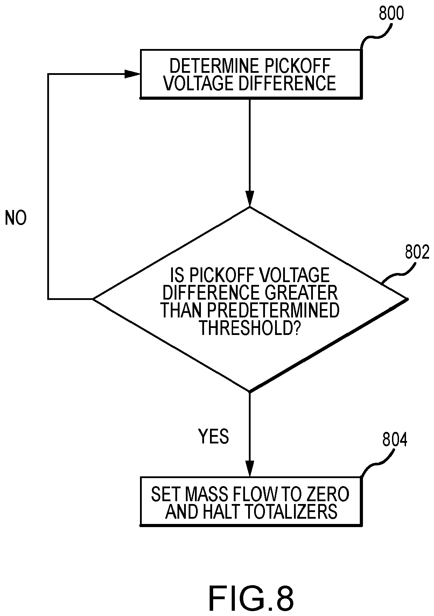

Turning to **FIG. 8****,** according to an embodiment, a method for identifying false totalizing is provided. In step 800, the voltage difference between inlet pickoff 105 and outlet pickoff 105' is determined. In step 802, this difference is compared to a predetermined threshold. If the difference between inlet pickoff 105 and outlet pickoff 105' is less than the predetermined threshold, step 800 may be repeated. If, however, the difference between inlet pickoff 105 and outlet pickoff 105' is greater than the predetermined threshold, then the measured mass flow rate should be set to zero, and totalizing should be halted, as shown in step 804. In an embodiment, step 800 should be repeated thereafter. It should be noted that thresholds will differ from meter to meter and may even differ from application to application.

As noted above, meter verification diagnostics (mass or stiffness) may, in an embodiment, be used instead of, or in addition to, the pick-off measurements discussed above. In an embodiment, sources of asymmetry are parsed out. Since entrained gas leads to an increase in drive gain and a drop in density, a combination of these parameters may be used to identify false totalizing more specifically compared to a conduit coating-based asymmetry.

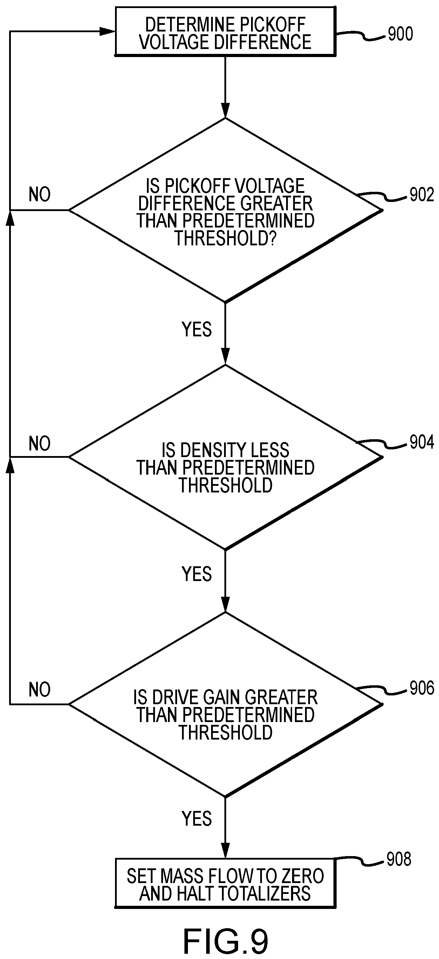

Turning to **FIG. 9****,** according to an embodiment, another method for identifying false totalizing is provided. In step 900, the voltage difference between inlet pickoff 105 and outlet pickoff 105' is determined. In step 902, this difference is compared to a predetermined threshold. If the difference between inlet pickoff 105 and outlet pickoff 105' is less than the predetermined threshold, step 900 may be repeated. If, however, the difference between inlet pickoff 105 and outlet pickoff 105' is greater than the predetermined threshold, then it should be determined whether the process fluid density is less than a predetermined threshold, as in step 904. If the process fluid density is less than the predetermined threshold, then it should be determined whether the drive gain is greater than a predetermined threshold, as in step 906. If the drive gain is greater than a predetermined threshold, then the measured mass flow rate should be set to zero, and totalizing should be halted, as shown in step 908.

In these embodiments, a situation may be detected where drive gain has increased above its nominal value, yet density has decreased from its nominal value. This may be found during a time period when flow tube asymmetry is not detected. Only when these conditions are met and the pick-off or Meter Verification asymmetry is detected is a halt to the totalizers initiated. Since false totalizing is extremely common, but coating and erosion are relatively uncommon, it may be appropriate, in an embodiment, to assume that asymmetries are from false totalizing instead of coating or erosion.

It should be noted that, in an embodiment, step 904 may be omitted. It should be noted that, in an embodiment, step 906 may be omitted. It should be noted that, in an embodiment, step 904 and 906 may be omitted and replaced with a tube mass comparison. It should be noted that, in an embodiment, step 904 and 906 may be omitted and replaced with a tube stiffness comparison. It should be noted that, in an embodiment, in step 902, a pickoff amplitude value (e.g. mV/Hz) may be used instead of voltage alone. It should be noted that, in an embodiment, steps 802 and 902 may be in addition to the step of comparing delta t to a predetermined delta t value. It should be noted that, in an embodiment, steps 802 and 902 may be substituted for the step of comparing delta t to a predetermined delta t value. Of these steps, any combination is contemplated. In an embodiment, once the measured mass flow rate is set to zero, and totalizing is halted, as shown in step 908, step 800 is repeated thereafter.

## Claims

1. A method for operating a flowmeter comprising:
flowing a process fluid through the flowmeter;
measuring a mass flow rate of the process fluid;
totalizing the process fluid flowing through the flowmeter;
the method **characterized by**:
measuring a first flowmeter parameter, wherein measuring a first flowmeter parameter comprises measuring a magnitude of asymmetry between a magnitude of a first pick-off sensor measurement and a magnitude of a second pick-off sensor measurement;
setting the measured mass flow rate to zero if the first flowmeter parameter differs from a predetermined threshold by a predetermined amount; and
halting totalizing if the first flowmeter parameter differs from a predetermined threshold by a predetermined amount.

2. The method of claim 1, comprising the steps of:
measuring a second flowmeter parameter;
wherein the step of setting the measured mass flow rate to zero if the first flowmeter parameter differs from a predetermined threshold by a predetermined amount comprises setting the measured mass flow rate to zero if the first flowmeter parameter and the second flowmeter parameter each differ from respective predetermined thresholds by respective predetermined amounts; and
wherein the step of halting totalizing if the first flowmeter parameter differs from a predetermined threshold by a predetermined amount comprises setting the measured mass flow rate to zero if the first flowmeter parameter and the second flowmeter parameter each differ from respective predetermined thresholds by respective predetermined amounts.

3. The method of claim 2, wherein the second flowmeter parameter comprises a drive current.

4. The method of claim 2, wherein the second flowmeter parameter comprises one or more of a delta t, a density, and a drive gain.

5. The method of claims 1 or 2, wherein the first or second flowmeter parameters comprise a voltage difference between the first pick-off sensor and the second pick-off sensor.

6. The method of claims 1 or 2, wherein the first or second flowmeter parameters comprise a calculated flow tube mass difference measured between the first pick-off sensor and the second pick-off sensor.

7. The method of claims 1 or 2, wherein the first or second flowmeter parameters comprise a calculated tube stiffness difference measured between the first pick-off sensor and the second pick-off sensor.

8. Meter electronics (20) for a flowmeter (5) configured to receive a process fluid, the meter electronics (20) comprising an interface (201) configured to communicate with a flowmeter assembly of the flowmeter (5), and receive a vibrational response, and a processing system (203) coupled to the interface (201) comprising:
a false totalizing routine (217) configured to:
determine a measured mass flow rate (221) of the process fluid in the flowmeter (5);
totalize the process fluid;
the false totalizing routine (217) **characterized by** being configured to:
measure a first flowmeter parameter, wherein measuring a first flowmeter parameter comprises measuring a magnitude of asymmetry between a magnitude of a first pick-off sensor (105) measurement and a magnitudes of a second pickoff sensor (105') measurement;
set the measured mass flow rate (221) to zero if the first flowmeter parameter differs from a predetermined threshold by a predetermined amount; and
halt totalizing if the first flowmeter parameter differs from a predetermined threshold by a predetermined amount.

9. The meter electronics (20) of claim 8, wherein the false totalizing routine (217) is further configured to:
measure a second flowmeter parameter;
wherein setting the measured mass flow rate to zero if the first flowmeter parameter differs from a predetermined threshold by a predetermined amount comprises setting the measured mass flow rate to zero if the first flowmeter parameter and the second flowmeter parameter each differ from respective predetermined thresholds by respective predetermined amounts; and
wherein halting totalizing if the first flowmeter parameter differs from a predetermined threshold by a predetermined amount comprises setting the measured mass flow rate to zero if the first flowmeter parameter and the second flowmeter parameter each differ from respective predetermined thresholds by respective predetermined amounts.

10. The meter electronics (20) of claim 9, wherein the second flowmeter parameter comprises one or more of a drive current and a drive gain.

11. The meter electronics (20) of claim 9, wherein the second flowmeter parameter comprises a delta t.

12. The meter electronics (20) of claims 8 or 9, wherein the first or second flowmeter parameters comprise a voltage difference between the first pick-off sensor (105) and the second pick-off sensor (105').

13. The meter electronics (20) of claims 8 or 9, wherein the first or second flowmeter parameters comprise a calculated flow tube mass difference measured between the first pick-off sensor (105) and the second pick-off sensor (105').

14. The meter electronics (20) of claims 8 or 9, wherein the first or second flowmeter parameters comprise a calculated tube stiffness difference measured between the first pick-off sensor (105) and the second pick-off sensor (105').

15. The meter electronics (20) of claims 8 or 9, wherein the first or second flowmeter parameters comprise a density.

## Patentansprüche

1. Verfahren zum Betrieb eines Durchflussmessers, das Folgendes umfasst:
Durchströmen eines Prozessfluids durch den Durchflussmesser;
Messen einer Massendurchflussrate des Prozessfluids;
Summieren des durch den Durchflussmesser strömenden Prozessfluids;
wobei das Verfahren durch Folgendes gekennzeichnet ist:
Messen eines ersten Durchflussmesserparameters, wobei das Messen eines ersten Durchflussmesserparameters das Messen einer Größe der Asymmetrie zwischen einer Größe einer ersten Abnahmesensormessung und einer Größe einer zweiten Abnahmesensormessung umfasst;
Setzen der gemessenen Massendurchflussrate auf Null, wenn der erste Durchflussmesserparameter von einem vorbestimmten Schwellenwert um einen vorbestimmten Betrag abweicht; und
Anhalten des Summierens, wenn der erste Durchflussmesserparameter von einem vorbestimmten Schwellenwert um einen vorbestimmten Betrag abweicht.

2. Verfahren nach Anspruch 1, das folgende Schritte umfasst:
Messen eines zweiten Durchflussmesserparameters;
wobei der Schritt des Setzens der gemessenen Massendurchflussrate auf Null, wenn der erste Durchflussmesserparameter von einem vorbestimmten Schwellenwert um einen vorbestimmten Betrag abweicht, das Setzen der gemessenen Massendurchflussrate auf Null umfasst, wenn der erste Durchflussmesserparameter und der zweite Durchflussmesserparameter jeweils von entsprechenden vorbestimmten Schwellenwerten um entsprechende vorbestimmte Beträge abweichen; und
wobei der Schritt des Anhaltens der Summierung, wenn der erste Durchflußmesserparameter von einem vorbestimmten Schwellenwert um einen vorbestimmten Betrag abweicht, das Setzen der gemessenen Massendurchflußrate auf Null umfasst, wenn der erste Durchflussmesserparameter und der zweite Durchflussmesserparameter jeweils von entsprechenden vorbestimmten Schwellenwerten um entsprechende vorbestimmte Beträge abweichen.

3. Verfahren nach Anspruch 2, wobei der zweite Durchflussmesserparameter einen Antriebsstrom umfasst.

4. Verfahren nach Anspruch 2, wobei der zweite Durchflussmesserparameter eines oder mehrere von einem Delta t, einer Dichte und einer Antriebsverstärkung umfasst.

5. Verfahren nach Anspruch 1 oder 2, wobei der erste oder zweite Durchflussmesserparameter eine Spannungsdifferenz zwischen dem ersten Abnahmesensor und dem zweiten Abnahmesensor umfasst.

6. Verfahren nach Anspruch 1 oder 2, wobei die ersten oder zweiten Durchflussmesserparameter eine berechnete Durchflussrohrmassendifferenz umfassen, die zwischen dem ersten Abnahmesensor und dem zweiten Abnahmesensor gemessen wird.

7. Verfahren nach Anspruch 1 oder 2, wobei die ersten oder zweiten Durchflussmesserparameter eine berechnete Rohrsteifigkeitsdifferenz umfassen, die zwischen dem ersten Abnahmesensor und dem zweiten Abnahmesensor gemessen wird.

8. Zählerelektronik (20) für einen Durchflussmesser (5), der zur Aufnahme eines Prozessfluids konfiguriert ist, wobei die Zählerelektronik (20) Folgendes umfasst: eine Schnittstelle (201), die dafür konfiguriert ist, mit einer Durchflussmesseranordnung des Durchflussmessers (5) zu kommunizieren und eine Schwingungsantwort zu empfangen, und ein Verarbeitungssystem (203), das mit der Schnittstelle (201) gekoppelt ist und Folgendes umfasst:
eine Falschsummierungsroutine (217), die für Folgendes konfiguriert ist:
Bestimmen einer gemessenen Massendurchflussrate (221) des Prozessfluids in dem Durchflussmesser (5);
Summieren des Prozessfluids;
wobei die Falschsummierungsroutine (217) **dadurch gekennzeichnet ist, dass** sie für Folgendes konfiguriert ist:
Messen eines ersten Durchflussmesserparameters, wobei das Messen eines ersten Durchflussmesserparameters das Messen einer Größe der Asymmetrie zwischen einer Größe einer ersten Abnahmesensor- (105) Messung und einer Größe einer zweiten Abnahmesensor- (105') Messung umfasst;
Setzen der gemessenen Massendurchflussrate (221) auf Null, wenn der erste Durchflussmesserparameter von einem vorbestimmten Schwellenwert um einen vorbestimmten Betrag abweicht; und
Anhalten des Summierens, wenn der erste Durchflussmesserparameter von einem vorbestimmten Schwellenwert um einen vorbestimmten Betrag abweicht.

9. Zählerelektronik (20) nach Anspruch 8, wobei die Falschsummierungsroutine (217) ferner für Folgendes konfiguriert ist:
Messen eines zweiten Durchflussmesserparameters;
wobei das Setzen der gemessenen Massendurchflussrate auf Null, wenn der erste Durchflussmesserparameter von einem vorbestimmten Schwellenwert um einen vorbestimmten Betrag abweicht, das Setzen der gemessenen Massendurchflussrate auf Null umfasst, wenn der erste Durchflussmesserparameter und der zweite Durchflussmesserparameter jeweils von entsprechenden vorbestimmten Schwellenwerten um entsprechende vorbestimmte Beträge abweichen; und
wobei das Anhalten der Summierung, wenn der erste Durchflußmesserparameter von einem vorbestimmten Schwellenwert um einen vorbestimmten Betrag abweicht, das Setzen der gemessenen Massendurchflußrate auf Null umfasst, wenn der erste Durchflussmesserparameter und der zweite Durchflussmesserparameter jeweils von entsprechenden vorbestimmten Schwellenwerten um entsprechende vorbestimmte Beträge abweichen.

10. Zählerelektronik (20) nach Anspruch 9, wobei der zweite Durchflussmesserparameter eines oder mehrere von einem Antriebsstrom und einer Antriebsverstärkung umfasst.

11. Zählerelektronik (20) nach Anspruch 9, wobei der zweite Durchflussmesserparameter ein Delta t umfasst.

12. Zählerelektronik (20) nach Anspruch 8 oder 9, wobei der erste oder zweite Durchflussmesserparameter eine Spannungsdifferenz zwischen dem ersten Abnahmesensor (105) und dem zweiten Abnahmesensor (105') umfasst.

13. Zählerelektronik (20) nach Anspruch 8 oder 9, wobei die ersten oder zweiten Durchflussmesserparameter eine berechnete Durchflussrohrmassendifferenz umfassen, die zwischen dem ersten Abnahmesensor (105) und dem zweiten Abnahmesensor (105') gemessen wird.

14. Zählerelektronik (20) nach Anspruch 8 oder 9, wobei die ersten oder zweiten Durchflussmesserparameter eine berechnete Rohrsteifigkeitsdifferenz umfassen, die zwischen dem ersten Abnahmesensor (105) und dem zweiten Abnahmesensor (105') gemessen wird.

15. Zählerelektronik (20) nach Anspruch 8 oder 9, wobei die ersten oder zweiten Durchflussmesserparameter eine Dichte umfassen.

## Revendications

1. Procédé de fonctionnement d'un débitmètre comprenant de :
faire circuler un fluide de traitement à travers le débitmètre ;
mesurer un débit massique du fluide de traitement ;
totaliser le fluide de traitement traversant le débitmètre ;
le procédé étant **caractérisé par** :
la mesure d'un premier paramètre de débitmètre, dans lequel la mesure d'un premier paramètre de débitmètre comprend la mesure d'une amplitude d'asymétrie entre une amplitude d'une mesure d'un premier capteur de détection et une amplitude d'une mesure d'un second capteur de détection ;
le réglage du débit massique mesuré sur zéro si le premier paramètre de débitmètre diffère d'un seuil prédéterminé d'une quantité prédéterminée ; et
l'arrêt de la totalisation si le premier paramètre de débitmètre diffère d'un seuil prédéterminé d'une quantité prédéterminée.

2. Procédé selon la revendication 1, comprenant les étapes consistant à :
mesurer un second paramètre de débitmètre ;
dans lequel l'étape de réglage du débit massique mesuré sur zéro si le premier paramètre de débitmètre diffère d'un seuil prédéterminé d'une quantité prédéterminée comprend le réglage du débit massique mesuré sur zéro si le premier paramètre de débitmètre et le second paramètre de débitmètre diffèrent chacun de seuils prédéterminés respectifs de quantités prédéterminées respectives ; et
dans lequel l'étape d'arrêt de la totalisation si le premier paramètre de débitmètre diffère d'un seuil prédéterminé d'une quantité prédéterminée comprend le réglage du débit massique mesuré sur zéro si le premier paramètre de débitmètre et le second paramètre de débitmètre diffèrent chacun de seuils prédéterminés respectifs de quantités prédéterminées respectives.

3. Procédé selon la revendication 2, dans lequel le second paramètre de débitmètre comprend un courant d'attaque.

4. Procédé selon la revendication 2, dans lequel le second paramètre de débitmètre comprend l'un ou plusieurs parmi un delta t, une densité et un gain d'attaque.

5. Procédé selon les revendications 1 ou 2, dans lequel les premier ou second paramètres de débitmètre comprennent une différence de tension entre le premier capteur de détection et le second capteur de détection.

6. Procédé selon les revendications 1 ou 2, dans lequel les premier ou second paramètres de débitmètre comprennent une différence de masse calculée du tube d'écoulement mesurée entre le premier capteur de détection et le second capteur de détection.

7. Procédé selon les revendications 1 ou 2, dans lequel les premier ou second paramètres de débitmètre comprennent une différence de rigidité de tube calculée mesurée entre le premier capteur de détection et le second capteur de détection.

8. Électronique d'appareil de mesure (20) pour un débitmètre (5) configuré pour recevoir un fluide de traitement, l'électronique d'appareil de mesure (20) comprenant une interface (201) configurée pour communiquer avec un ensemble débitmètre du débitmètre (5), et recevoir une réponse vibratoire, et un système de traitement (203) couplé à l'interface (201) comprenant :
une routine de fausse totalisation (217) configurée pour :
déterminer un débit massique mesuré (221) du fluide de traitement dans le débitmètre (5) ;
totaliser le fluide de traitement ;
la routine de fausse totalisation (217) étant **caractérisée en ce qu'**elle est configurée pour :
mesurer un premier paramètre de débitmètre, dans lequel la mesure d'un premier paramètre de débitmètre comprend la mesure d'une amplitude d'asymétrie entre une amplitude d'une mesure d'un premier capteur de détection (105) et une amplitude d'une mesure d'un second capteur de détection (105') ;
régler le débit massique mesuré (221) sur zéro si le premier paramètre de débitmètre diffère d'un seuil prédéterminé d'une quantité prédéterminée ; et
arrêter la totalisation si le premier paramètre de débitmètre diffère d'un seuil prédéterminé d'une quantité prédéterminée.

9. Électronique d'appareil de mesure (20) selon la revendication 8, dans laquelle la routine de fausse totalisation (217) est en outre configurée pour :
mesurer un second paramètre de débitmètre ;
dans lequel le réglage du débit massique mesuré sur zéro si le premier paramètre de débitmètre diffère d'un seuil prédéterminé d'une quantité prédéterminée comprend le réglage du débit massique mesuré sur zéro si le premier paramètre de débitmètre et le second paramètre de débitmètre diffèrent chacun de seuils prédéterminés respectifs de quantités prédéterminées respectives ; et
dans laquelle l'arrêt de la totalisation si le premier paramètre de débitmètre diffère d'un seuil prédéterminé d'une quantité prédéterminée comprend le réglage du débit massique mesuré sur zéro si le premier paramètre de débitmètre et le second paramètre de débitmètre diffèrent chacun de seuils prédéterminés respectifs de quantités prédéterminées respectives.

10. Électronique d'appareil de mesure (20) selon la revendication 9, dans laquelle le second paramètre de débitmètre comprend l'un ou plusieurs parmi un courant d'attaque et un gain d'attaque.

11. Électronique d'appareil de mesure (20) selon la revendication 9, dans laquelle le second paramètre de débitmètre comprend un delta t.

12. Électronique d'appareil de mesure (20) selon les revendications 8 ou 9, dans laquelle les premier ou second paramètres de débitmètre comprennent une différence de tension entre le premier capteur de détection (105) et le second capteur de détection (105').

13. Électronique d'appareil de mesure (20) selon les revendications 8 ou 9, dans laquelle les premier ou second paramètres de débitmètre comprennent une différence de masse calculée du tube d'écoulement mesurée entre le premier capteur de détection (105) et le second capteur de détection (105').

14. Électronique d'appareil de mesure (20) selon les revendications 8 ou 9, dans laquelle les premier ou second paramètres de débitmètre comprennent une différence de rigidité de tube calculée mesurée entre le premier capteur de détection (105) et le second capteur de détection (105').

15. Électronique d'appareil de mesure (20) selon les revendications 8 ou 9, dans laquelle les premier ou second paramètres de débitmètre comprennent une densité.
